# EUROPÄISCHE PATENTSCHRIFT

(11) **EP 4 430 324 B1**
(45) Veröffentlichungstag und Bekanntmachung des Hinweises auf die Patenterteilung: **08.04.2026**
(21) Anmeldenummer: 22812611.6
(22) Anmeldetag: 02.11.2022
(51) Int. Cl.: F16H 57/021, F16H 57/033

(54) **GETRIEBEMOTOR, AUFWEISEND EINEN ELEKTROMOTOR UND EIN GETRIEBE**
GEAR MOTOR COMPRISING AN ELECTRIC MOTOR AND A GEARBOX
MOTEUR À ENGRENAGES COMPRENANT UN MOTEUR ÉLECTRIQUE ET UNE BOÎTE DE VITESSES

(30) Priorität: 09.11.2021 DE 102021005553
(43) Veröffentlichungstag der Anmeldung: 18.09.2024
(73) Patentinhaber: SEW-EURODRIVE GmbH & Co. KG, 76646 Bruchsal (DE)
(72) Erfinder: SCHILLINGER, Jens, 76437 Rastatt (DE); WURZER, Sven, 76676 Graben-Neudorf (DE); HANNET, Stefan, 68723 Schwetzingen (DE); LUTZ, Markus, 68794 Oberhausen-Rheinhausen (DE); WÖPPERMANN, Markus, 76307 Karlsbad (DE); ABELE, Philipp, 69493 Hirschberg (DE)
(86) Internationale Anmeldenummer: PCT/EP2022/080605
(87) Internationale Veröffentlichungsnummer: WO 2023/083669

(56) Entgegenhaltungen:
- DE-A1- 10 312 941
- DE-A1- 3 502 015
- DE-A1- 4 401 164
- DE-B1- 2 347 523

## Beschreibung

Die Erfindung betrifft einen Getriebemotor, aufweisend einen Elektromotor und ein Getriebe.

Es ist allgemein bekannt, dass ein Getriebemotor ein von einem Elektromotor antreibbares Getriebe aufweist.

Aus der DE 103 12 941 A1 ist ein Bausatz für eine Baureihe von Getriebemotoren bekannt.

**Aus der** DE 35 02 015 A1 **ist als nächstliegender Stand der Technik ein Getriebemotor bekannt.**

**Aus der** DE 44 01 164 A1 **ist an einen Elektromotor anflanschbares Getriebe bekannt.**

**Aus der** DE 23 47 523 B1 **ist eine Vorrichtung zum Anbau eines Motors bekannt.**

**Aus der** DE 103 12 941 A1 **ist ein Bausatz für eine Baureihe von Getriebemotoren bekannt.**

Der Erfindung liegt daher die Aufgabe zugrunde, einen Getriebemotor einfach herstellbar weiterzubilden.

Erfindungsgemäß wird die Aufgabe bei dem Getriebemotor nach den in Anspruch 1 angegebenen Merkmalen gelöst.

Wichtige Merkmale der Erfindung bei dem Getriebemotor sind, dass der Getriebemotor einen Elektromotor und ein Getriebe aufweist,
wobei der Elektromotor ein Statorgehäuse, eine Rotorwelle und ein erstes Lager, insbesondere Wälzlager, insbesondere Kugellager, zur Lagerung der Rotorwelle aufweist,
wobei eine Kupplungshülse auf die Rotorwelle aufgesteckt ist und mit der Rotorwelle drehfest verbunden ist,
wobei ein Innenring eines zweiten Lagers, insbesondere Wälzlagers, insbesondere Kugellagers, auf die Kupplungshülse aufgesteckt ist und der Außenring des zweiten Lagers in einem Adapterring aufgenommen ist, welcher mit einem Gehäuseteil des Getriebes drehfest verbunden ist,
wobei der Adapterring auf seiner vom Gehäuseteil abgewandten Seite mit einem ringartig ausgeführten Rundflansch verbunden ist, welcher auf seiner vom Adapterring abgewandten Seite mit einem Rundflansch verbunden ist, welcher mit dem Statorgehäuse verbunden ist.

Von Vorteil ist dabei, dass eine einfache Herstellung ermöglicht ist. Insbesondere ist ein direkter Anbau des Motors ans Getriebe ermöglicht, so dass für die Rotorwelle als zweites Lager das eintriebsseitige Lager des Getriebes mitnutzbar ist. Somit ist ein besonders kompakter Getriebemotor herstellbar. Außerdem ist die Verlustleistung verringerbar, da weniger Lager notwendig sind. Nachteil ist zwar, dass die Rotorwelle bei Herstellung des Elektromotors noch nicht vollständig gelagert werden kann. Dieser Nachteil ist jedoch durch eine als Behelfslagerung fungierende Gleitlagerbuchse behebbar. Somit ist auch ein Funktionstest des noch nicht ans Getriebe angebauten Elektromotors bei der Montage ausführbar. Nach Anbau ans Getriebe kann die Gleitlagerbuchse im Betrieb des Elektromotors verschleißen oder zumindest ihre Lagerungsfunktion verlieren und somit die Erzeugung von Verlustleistung verhindern.

Bei einer vorteilhaften Ausgestaltung ist die Rotorwelle, insbesondere im Betrieb, also nach Anbauen des Elektromotors an das Getriebe, über das erste und das zweite Lager gelagert. Von Vorteil ist dabei, dass im Betrieb eine stabile belastbare Lagerung zur Verfügung steht und zuvor die Rotorwelle zumindest über das erste Lager und die Gleitlagerbuchse lagerbar ist.

Bei einer vorteilhaften Ausgestaltung ist ein Sonnenrad des Getriebes einen zapfenartigen Fortsatz aufweist der in die Kupplungshülse eingesteckt,
wobei das Sonnenrad mit der Kupplungshülse drehfest verbunden ist. Von Vorteil ist dabei, dass das Sonnenrad als eintreibendes Zahnrad des Getriebes ebenfalls zusammen mit der Rotorwelle lagerbar ist. Somit sind weitere Lager verzichtbar.

Bei einer vorteilhaften Ausgestaltung ist das erste Lager als Festlager ausgeführt. Von Vorteil ist dabei, dass im Bereich des zweiten Lagers die Rotorwelle thermische Ausdehnungen aufweisen darf und in axialer Richtung auch relative Bewegungen zur Kupplungshülse und/oder zum zweiten Lager zugelassen sind. Insofern ist die Rotorwelle im Bereich des zweiten Lagers aber auch schon über die Gleitlagerbuchse lose gelagert.

Bei einer vorteilhaften Ausgestaltung ist das Sonnenrad beabstandet von der Rotorwelle,
wobei in dem Raumbereich zwischen Sonnenrad und Rotorwelle Schmierstoff, insbesondere Schmierfett, angeordnet ist,
wobei der Raumbereich von der Kupplungshülse, dem Sonnenrad und der Rotorwelle begrenzt ist. Von Vorteil ist dabei, dass die Rotorwelle thermisch bedingt axial wachsen kann und sogar relativ zur Kupplungshülse verschoben werden kann. Dabei sind trotzdem Geräuschbildung und Verschleiß verhindert. Denn durch den Schmierstoffvorrat des Raumbereichs ist eine Schmierung der Verzahnung der Rotorwelle erreichbar. Auf der vom Raumbereich abgewandten Seite ist ein Dichtring, insbesondere O-Ring, angeordnet, der das Austreten von Schmierstoff zum Innenraumbereich des Elektromotors verhindert. Somit ist Betriebssicherheit hergestellt und sowohl das Sonnenrad als auch die Rotorwelle mittels der Kupplungshülse und dem zweiten Lager lagerbar. Die Ausführung des Getriebemotors ist also kompakt und trotzdem kostengünstig und einfach ausführbar.

Bei einer vorteilhaften Ausgestaltung ist das Sonnenrad mit der Kupplungshülse in Umfangsrichtung formschlüssig verbunden,
insbesondere wobei das Sonnenrad eine Verzahnung aufweist, die in das Material der Kupplungshülse eingepresst und eingeschnitten ist. Von Vorteil ist dabei, dass das Sonnenrad von der Rotorwelle beabstandet ist und trotzdem das Sonnenrad mit der Rotorwelle zusammen über die Kupplungshülse und das zweite Lager lagerbar ist.

Bei einer vorteilhaften Ausgestaltung ist die Rotorwelle mit der Kupplungshülse in Umfangsrichtung formschlüssig verbunden,
insbesondere wobei die Kupplungshülse eine Verzahnung aufweist, die in das Material der Kupplungshülse eingepresst und eingeschnitten oder umgeformt ist. Von Vorteil ist dabei, dass die Kupplungshülse mittels Steckverzahnung drehfest verbindbar ist und darüber hinaus das zweite Lager trotz seines Abstandes zur Rotorwelle als Lager fungiert.

Bei einer vorteilhaften Ausgestaltung ist zwischen der Rotorwelle und der Kupplungshülse, insbesondere auf der von dem Sonnenrad abgewandten Seite des Verbindungsbereichs zwischen Rotorwelle und Kupplungshülse, auf der Rotorwelle ein Dichtring, insbesondere O-Ring, aufgesteckt, welcher zur Kupplungshülse hin abdichtet und/oder an der Kupplungshülse anliegt und die Rotorwelle vorzentriert,
insbesondere so, dass kein Schmierstoff aus dem Raumbereich in den Innenraum des Elektromotors gelangen kann und/oder so, dass der Dichtring den Raumbereich zum Innenraum des Elektromotors hin abdichtet. Von Vorteil ist dabei, dass der Innenraum des Elektromotors vor dem Austreten von Schmierstoff geschützt ist.

Bei einer vorteilhaften Ausgestaltung ist auf die Rotorwelle eine Gleitlagerbuchse aufgesteckt, welche in eine Bohrung des Quadratflansches eingepresst und/oder eingeklebt ist, insbesondere zur hilfsweisen Lagerung der Rotorwelle bei der Montage, **also bei noch fehlendem zweiten Lager und/oder bei noch fehlender Lagerung durch das zweite Lager,**
wobei **zwischen Gleitlagerbuchse und Rotorwelle ein Ringspalt vorhanden ist, so dass im Betrieb oder zumindest nach Ablauf einer Anfangszeitdauer im Betrieb die Lagerung der Rotorwelle durch das erste und das zweite Lager, insbesondere Kugellager, den Reibkontakt zwischen der Rotorwelle und der Gleitlagerbuchse verhindert.** Von Vorteil ist dabei, dass eine behelfsmäßige Lagerung der Rotorwelle für einen Funktionstest bei der Montage durchführbar ist, ohne dass das Getriebe angebaut und somit das zweite Lager vorhanden wäre. Außerdem ist die Massenträgheit der Rotorwelle möglichst gering.

Alternativ ist auf die Rotorwelle eine Gleitlagerbuchse aufgesteckt, welche in eine Bohrung eines Quadratflansches hineinragt, insbesondere zur hilfsweisen Lagerung der Rotorwelle bei der Montage, **insbesondere also bei noch fehlendem zweiten Lager und/oder bei noch fehlender Lagerung durch das zweite Lager,**
**wobei zwischen der Gleitlagerbuchse und der Bohrung des Quadratflansches ein Ringspalt vorhanden ist,**
**insbesondere so, dass**
**die Lagerung der Rotorwelle durch das erste und das zweite Lager, insbesondere Kugellager, den Reibkontakt zwischen der Rotorwelle und der Gleitlagerbuchse verhindert. Von Vorteil ist dabei, dass das Trägheitsmoment durch die Masse der Gleitlagerbuchse erhöht ist und einen ruhigeren Betrieb der Rotorwelle ermöglicht. Wenn die beiden Lager noch nicht eingebaut sind, ist mittels der Gleitlagerbuchse eine Notlagerung oder Hilfslagerung verfügbar.**

Bei einer vorteilhaften Ausgestaltung ist das Sonnenrad mit Planetenrädern im Eingriff, welche mit einer Hohlverzahnung des Gehäuseteils im Eingriff ist,
insbesondere wobei die Planetenräder auf Bolzen drehbar gelagert sind, welche mit einem Planetenträger fest verbunden sind, insbesondere welcher mit der abtreibenden Welle drehfest verbunden ist oder als abtreibende Welle fungiert. Von Vorteil ist dabei, dass das Getriebe koaxial ausgeführt ist. Somit wird über das Sonnenrad keine Querkraft eingetragen. Daher ist die Rotorwelle stabil lagerbar über das zweite Lager und wird nicht von von der Seite des Sonnenrads her eingetragenen Querkräften belastet, insbesondere und/oder zum Taumeln gebracht.

Bei einer vorteilhaften Ausgestaltung ist im Adapterring ein Wellendichtring aufgenommen, welcher zur Kupplungshülse hin abdichtet. Von Vorteil ist dabei, dass die Kupplungshülse über das zweite Lager nicht nur im Adapterring gelagert, sondern über den Wellendichtring auch abgedichtet ist. Alternativ ist anstatt des Wellendichtrings eine Labyrinthdichtung vorsehbar, die im Falle einer Fettschmierung den Getriebeinnenraum verschließt.

Bei einer vorteilhaften Ausgestaltung ist die Gleitlagerbuchse aus einem Gleitlagerwerkstoff, insbesondere Kunststoff, gefertigt. Von Vorteil ist dabei, dass eine Gleitlagerung einfach herstellbar ist.

Bei einer vorteilhaften Ausgestaltung ist die Kupplungshülse aus Stahl gefertigt. Von Vorteil ist dabei, dass ein hohes Drehmoment übertragbar ist.

Bei einer vorteilhaften Ausgestaltung ist der Außenumfang des Quadratflansches quaderförmig und/oder weist eine diskrete Rotationssymmetrie auf. Von Vorteil ist dabei, dass der Quadratflansch an das ebenfalls quaderförmige und/oder eine diskrete Rotationssymmetrie aufweisende Statorgehäuse des Elektromotors anpassbar ist. Somit ist eine Schnittstelle zum Rundflansch hin im Quadratflansch vorsehbar und muss nicht am Statorgehäuse vorgesehen werden.

Bei einer vorteilhaften Ausgestaltung ist der Außenumfang des Rundflansches rund, kreisförmig und/oder weist eine diskrete Rotationssymmetrie auf. Von Vorteil ist dabei, dass der Rundflansch an die Getriebeform des koaxialen Getriebes anpassbar ist. Die Schnittstelle zum Quadratflansch hin ist daher im Rundflansch vorsehbar und muss nicht im Getriebe vorgesehen werden.

Bei einer vorteilhaften Ausgestaltung ist der Wellendichtring, der Adapterring, das Gehäuseteil, die abtreibende Welle und ein weiterer Wellendichtring, der im Gehäuseteil aufgenommen und dichtet zur abtreibenden Welle hin ab,
den zumindest teilweise mit Schmieröl befüllten Innenraum des Getriebes begrenzen, insbesondere und abdichten. Von Vorteil ist dabei, dass sowohl zur Umgebung hin als auch zum Motor hin Dichtigkeit hergestellt ist. Alternativ ist anstatt des Wellendichtrings eine Labyrinthdichtung vorsehbar, die insbesondere im Falle einer Fettschmierung bevorzugt abdichtet.

Bei einer vorteilhaften Ausgestaltung überlappt der von dem zweiten Lager, insbesondere bezogen auf die Drehachse der Rotorwelle, in axialer Richtung überdeckte Bereich mit dem von der Verzahnung der Kupplungshülse in axialer Richtung überdeckten Bereich zumindest teilweise,
insbesondere wobei die Bereiche in axialer Richtung von der Gleitlagerbuchse beabstandet sind. Von Vorteil ist dabei, dass die Rotorwelle möglichst stabil lagerbar ist, so dass Schwingungen der Rotorwelle im Betrieb vermieden werden. Außerdem ist mittels der Gleitlagerbuchse eine Hilfslagerung bei der Herstellung des Motors ermöglicht. Somit ist der Elektromotor schon betreibbar, bevor das Getriebe samt Adapterring, zweitem Lager, insbesondere und Kupplungshülse angebaut wird.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:

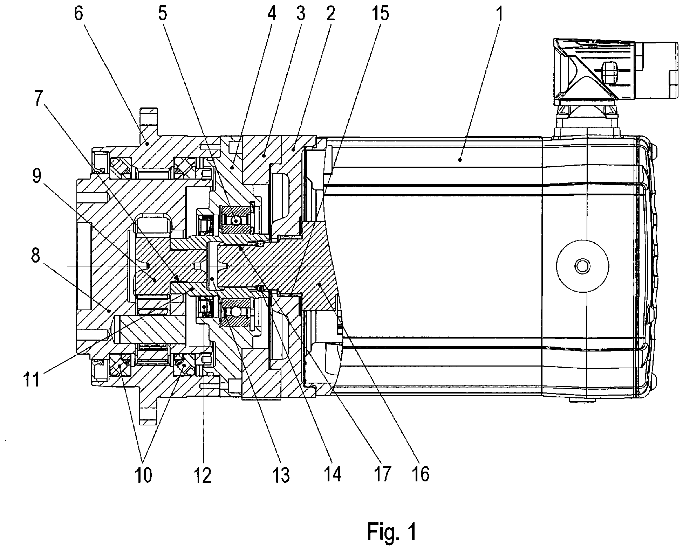

In der Figur 1 ist ein Getriebemotor, aufweisend ein von einem Elektromotor angetriebenes Getriebe, angeschnitten dargestellt.

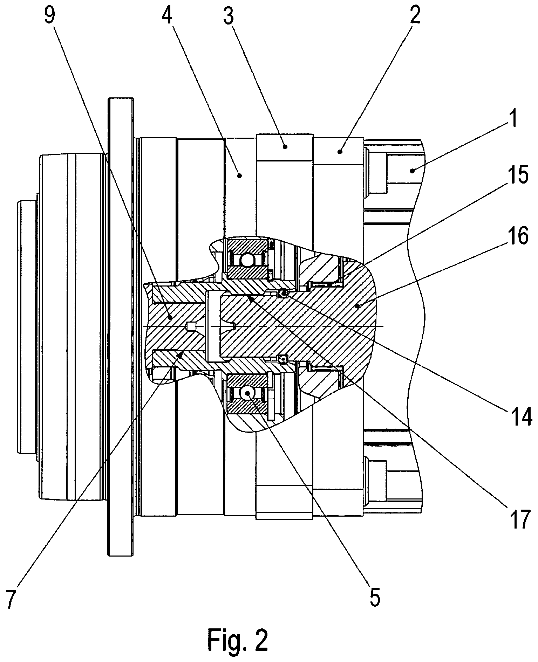

In der Figur 2 ist ein Ausschnitt vergrößert dargestellt.

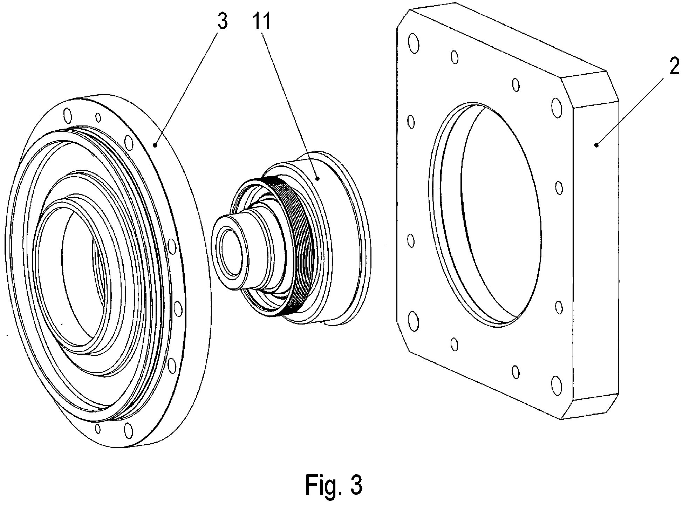

In der Figur 3 sind ein Quadratflansch 2 und ein Rundflansch 3 in Schrägansicht sichtbar.

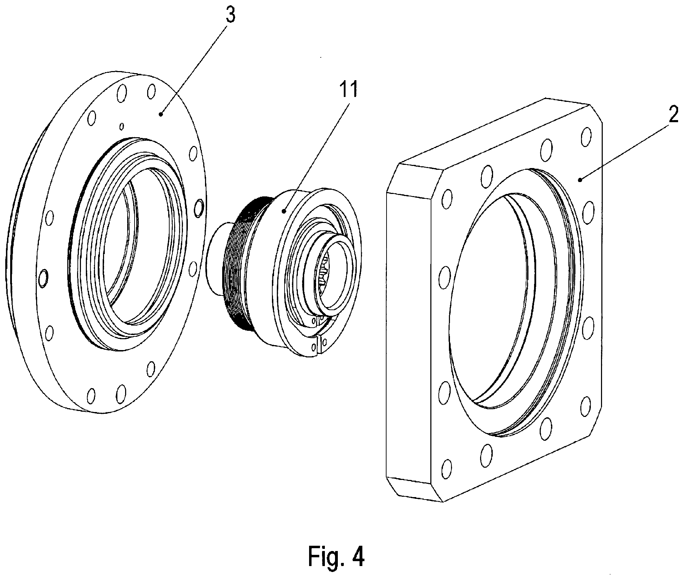

In der Figur 4 sind die beiden Flansche aus einer anderen Blickrichtung dargestellt.
In der Figur 5 ist eine Baureihe von erfindungsgemäßen Getriebemotoren schematisch dargestellt.

Wie in den Figuren dargestellt, weist der Getriebemotor einen Elektromotor auf, der über einen Quadratflansch 2, welcher mit dem vorzugsweise im Wesentlichen quaderförmigen Statorgehäuse 1 des Elektromotors verbunden ist, und einen Rundflansch 3, der einerseits mit einem Adapterring 4, welcher mit einem Gehäuseteil 6 des Getriebes verbunden ist, verbunden ist und andererseits mit dem Quadratflansch 3.

Das Getriebe ist als koaxiales Getriebe ausgeführt, insbesondere als Planetengetriebe.

Die Rotorwelle 16 des Elektromotors ist mittels eines ersten Lagers, welches im Statorgehäuse 1 aufgenommen ist und in den Figuren nicht dargestellt ist, drehbar gelagert und mittels eines zweiten Lagers 5 indirekt drehbar gelagert.

Das erste Lager ist vorzugsweise als Festlager ausgeführt.

Das zweite Lager 5 ist in einem Adapterring 4 aufgenommen, der zwischen dem Rundflansch 3 und dem Gehäuseteil 6 angeordnet ist.

Der Innenring des zweiten Lagers 5 ist auf eine Kupplungshülse 11 aufgesteckt, in welche die Rotorwelle 16 eingesteckt ist und in welche ein Sonnenrad 9 eingesteckt ist.

Hierzu weist die Rotorwelle eine Verzahnung 17, insbesondere Steckverzahnung auf, welche in eine Innenverzahnung der Kupplungshülse 11 eingesteckt ist, so dass die Rotorwelle 16 mit der Kupplungshülse 11 in Umfangsrichtung formschlüssig, insbesondere also drehfest, verbunden ist.

Außerdem ist das Sonnenrad 9 mit seiner Verzahnung 7, insbesondere Steckverzahnung, in eine weitere innenzylindrische Bohrung der Kupplungshülse 11 eingesteckt. Beim Einstecken schneidet sich die Verzahnung 7 in das Material der Kupplungshülse 11, so dass das Sonnenrad 9 mit der Kupplungshülse 11 in Umfangsrichtung formschlüssig, insbesondere also drehfest, verbunden ist.

Das Sonnenrad 9 ist von der Rotorwelle 16 beabstandet, so dass ein Raumbereich für Schmierstoff von der Kupplungshülse 11 umgeben ist. Da dieser Raumbereich von der Kupplungshülse 11, dem Sonnenrad 9 und der Rotorwelle 16 begrenzt ist, wird auch der Eingriffsbereich der Verzahnung 17 vom Schmierstoff tangiert.

Im Adapterring 4 ist ein Wellendichtring 12 aufgenommen, der zur Kupplungshülse hin abdichtet. Hierzu weist die Kupplungshülse eine Dichtfläche auf, welche eine Dichtlippe des Wellendichtrings 12 berührt. Die Dichtfläche ist insbesondere fein bearbeitet und zylindrisch ausgeführt.

Die Rotorwelle 16 ragt durch eine Bohrung des Quadratflansches hindurch. Dabei ist in der Bohrung eine Gleitlagerbuchse 15 aufgenommen, die vorzugsweise aus Kunststoff ausgeführt ist und/oder hohlzylindrisch ausgebildet ist. Die Rotorwelle 16 ragt durch die hohle Gleitlagerbuchse 15 hindurch. Auf diese Weise ist eine Notlagerung der Rotorwelle mittels der Gleitlagerbuchse 15 für Montagezwecke bereitgestellt. Denn so lange der Elektromotor noch nicht ans Getriebe angebaut ist und die Kupplungshülse 11 nicht mit der Rotorwelle 16 steckverbunden ist, übernimmt die Gleitlagerbuchse 15 Lagerfunktion für die Rotorwelle 16. Nach Aufstecken der Kupplungshülse 11 auf die Rotorwelle 16 und nach Einstecken der Kupplungshülse in das im Adapterring 4 aufgenommene Lager 5 übernimmt das Lager 5 die Lagerfunktion und die Gleitlagerbuchse 15 ist überflüssig.

Da auch das Sonnenrad 9 in die Kupplungshülse 11 mit der auf dem zapfenartigen Fortsatz des Sonnenrads 9 vorgesehenen Verzahnung 7 in die Kupplungshülse 11 eingesteckt wird und somit drehfest verbunden wird, ist das Sonnenrad 9 mittels des Lagers 5 drehbar gelagert.

Das Sonnenrad 9 ist im Eingriff mit Planetenrädern, welche auf Bolzen drehbar gelagert sind, welche in einen Planetenträger eingesteckt sind, der mit der abtreibenden Welle 8 drehfest verbunden oder einstückig ausgeführt ist.

Die abtreibenden Welle 8 wird über in einem Gehäuseteil 6 aufgenommenen Lager drehbar gelagert.

Das Gehäuseteil 6 des Getriebes ist an seinem Außenumfang gerundet ausgeführt, dass das Getriebe als koaxiales Getriebe ausgeführt ist.

Das Statorgehäuseteil 1 ist quaderförmig ausgeformt und mit dem Quadratflansch 2 verbunden, der ebenfalls einen im Wesentlichen quaderförmigen Außenumfang aufweist. Der mit dem Gehäuseteil 6 des Getriebes verbundene Rundflansch 3 ist entsprechend des Gehäuseteils 6 gerundet ausgeführt.

Sowohl der Quadratflansch 2 als auch der Rundflansch 3 weisen eine axial durchgehende Bohrung auf, so dass eine Verbindungsschraube durchführbar ist und in eine Gewindebohrung des Adapterrings 4 einschraubbar ist. Alternativ weist aber der Adapterring 4 ebenfalls eine axial durchgehende Bohrung auf, so dass die Verbindungsschraube durchführbar ist und in eine Gewindebohrung des Gehäuseteils 6 einschraubbar ist. Somit werden die beiden Flansche (2, 3) und der Adapterring 4 von dem am Quadratflansch 2 anliegenden Schraubenkopf der Schraube zum Gehäuseteil 6 hingedrückt und dadurch zusammengehalten.

Die Verzahnung 7 des Sonnenrads 9 weist einen maximalen Außendurchmesser auf, welcher einen kleineren Wert hat als der lichte Innendurchmesser der Kupplungshülse 11 in dem von der Verzahnung 17 überdeckten axialen Bereich und/oder als Wert des größten maximalen Außendurchmessers der Verzahnung 17 der Rotorwelle 16.

Bei weiteren erfindungsgemäßen Ausführungsbeispielen wird die Kupplungshülse in dem von der Verzahnung 17 überdeckten axialen Bereich innenverzahnt und die Rotorwelle zylindrisch, also ohne die Verzahnung 17, ausgeführt. In diesem Fall schneidet sich die Verzahnung der Kupplungshülse 11 in die Rotorwelle 16 beim Aufstecken der Kupplungshülse 11 auf die Rotorwelle 16 ein.

Die Gleitlagerbuchse 15 ist zum Motor hin axial begrenzt durch eine an der Rotorwelle 16 ausgebildete Wellenstufe und zum Getriebe hin durch eine an der die Gleitlagerbuchse 15 aufnehmenden Bohrung ausgebildeten Stufe.

Ein Dichtring 14, insbesondere O-Ring, ist auf die Rotorwelle 16 aufgesteckt und liegt an der Kupplungshülse 11 an. Somit dichtet der Dichtring 14 zur Kupplungshülse 11 hin ab. Der Dichtring 14 ist axial begrenzt durch eine an der Rotorwelle 16 ausgebildete Stufe.

Bei weiteren erfindungsgemäßen Ausführungsbeispielen wird statt der Verzahnung 17, insbesondere Steckverzahnung, eine kraftschlüssige Verbindung realisiert, insbesondere beispielsweise ein zylindrisches Ende der Rotorwelle eingepresst in die Kupplungshülse. Ebenso ist auch die Verzahnung 7, insbesondere Steckverzahnung durch eine kraftschlüssige Verbindung ersetzbar. Zwar ist somit eine einfachere Herstellung mit geringem Kraftaufwand ermöglicht, allerdings ist nur ein geringeres Drehmoment sicher übertragbar, da die kraftschlüssige Verbindung weniger tragfähig ist also die durch die Steckverzahnung vermittelte formschlüssige Verbindung.

Der Adapterring 4 weist einen bezogen auf die Drehachse der Rotorwelle 16 in Umfangsrichtung umlaufenden Zentrierkragen auf, an dem die radiale Innenwand, also Wandung einer Bohrung, des Rundflansches 3 anliegt.

Der Quadratflansch 2 weist ebenfalls einen in Umfangsrichtung umlaufenden Zentrierkragen auf, an dem die radiale Innenwand, also Wandung einer Bohrung, des Rundflansches 3 anliegt.

Mittels des Adapterrings und der beiden Flansche (2, 3) ist ein Baukastenprinzip realisierbar. Denn mit einer geringen Anzahl von unterschiedliche großen Elektromotoren und Getrieben ist eine große Anzahl von Varianten realisierbar.

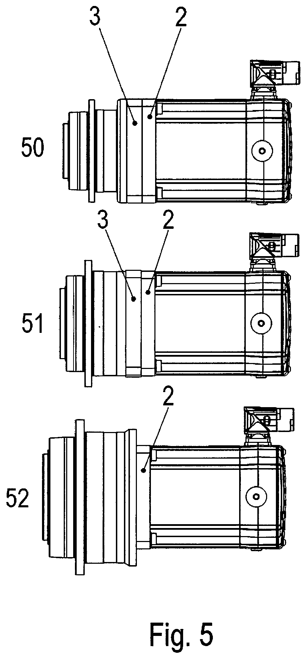

Hierzu zeigt Figur 5 drei Getriebemotoren (50, 51, 52), welche sich unterscheiden, indem verschieden große Getriebe vom gleichen Elektromotor antreibbar sind und dabei die Anbindung mittels geeigneter Dimensionierung und Auswahl des Adapterrings 4 und der beiden Flansche (2, 3) ausgeführt ist.

Insbesondere ist das Getriebe ein Planetengetriebe, weshalb das Sonnenrad 9 mit mehreren am Umfang gleichmäßig verteilt angeordneten Planetenrädern im Eingriff ist. Eine Querkraft ist somit im Wesentlichen nicht bewirkt. Daher lenkt das Sonnenrad 9 die Kupplungshülse 11 nicht aus, sondern stabilisiert zusätzlich. Dies bewirkt einen ruhigeren Lauf der Rotorwelle 16, welche ansonsten abhängig von einer taumelnden Kupplungshülse 11 nur schlecht gelagert wäre durch das Lager 5.

Denn das Lager 5 ist beabstandet von der Rotorwelle 16 und führt die Lagerfunktion nur über die zwischengeordnete Kupplungshülse 11 aus.

Umfangsrichtung, radiale Richtung sowie axiale Richtung sind hier stets auf die Drehachse der Rotorwelle 16 und/oder des Sonnenrades 9 und/oder der abtreibenden Welle 8 bezogen.

Bei einer vorteilhaften Ausgestaltung ist die Rotorwelle 16 mit ihrer Verzahnung 17 in eine innenzylindrische Bohrung der Kupplungshülse 11 eingesteckt ist, wobei beim Einstecken der Rotorwelle 16 die Verzahnung 17 in das Material der Kupplungshülse 11 eingeschnitten ist, so dass die Rotorwelle 16 mit der Kupplungshülse 11 in Umfangsrichtung formschlüssig, insbesondere also drehfest, verbunden ist.

### Bezugszeichenliste

1 Statorgehäuse
2 Quadratflansch
3 Rundflansch
4 Adapterring
5 Lager
6 Gehäuseteil, insbesondere mit Hohlrad oder Hohlverzahnung
7 Verzahnung, insbesondere Steckverzahnung
8 abtreibende Welle
9 Sonnenrad
10 Lager, insbesondere Schräglager
11 Kupplungshülse
12 Wellendichtring
13 Schmierstoff, insbesondere Schmierfett
14 Dichtring, insbesondere O-Ring
15 Gleitlagerbuchse, insbesondere hohlzylindrisch
16 Rotorwelle
17 Verzahnung, insbesondere Steckverzahnung
18 weiterer Wellendichtring
50 erster Getriebemotor
51 zweiter Getriebemotor
52 dritter Getriebemotor

## Patentansprüche

1. Getriebemotor (50), aufweisend einen Elektromotor und ein Getriebe,
wobei der Elektromotor ein Statorgehäuse (1), eine Rotorwelle (16) und ein erstes Lager (15) zur Lagerung der Rotorwelle (16) aufweist,
wobei eine Kupplungshülse (11) auf die Rotorwelle (16) aufgesteckt ist und mit der Rotorwelle (16) drehfest verbunden ist,
wobei ein Innenring eines zweiten Lagers (5), insbesondere Wälzlagers, insbesondere Kugellagers, auf die Kupplungshülse (11) aufgesteckt ist und der Außenring des zweiten Lagers in einem Adapterring (4) aufgenommen ist, welcher mit einem Gehäuseteil (6) des Getriebes drehfest verbunden ist,
wobei der Adapterring (4) auf seiner vom Gehäuseteil (6) abgewandten Seite mit einem ringartig ausgeführten Quadratflansch (2) verbunden ist, welcher auf seiner vom Adapterring (4) abgewandten Seite mit einem Rundflansch (3) verbunden ist, welcher mit dem Statorgehäuse (1) verbunden ist,
**dadurch gekennzeichnet, dass**
ein Sonnenrad (9) des Getriebes einen zapfenartigen Fortsatz aufweist der in die Kupplungshülse (11) eingesteckt ist,
wobei das Sonnenrad (9) mit der Kupplungshülse (11) drehfest verbunden ist.

2. Getriebemotor (50) nach Anspruch 1,
**dadurch gekennzeichnet, dass**
die Rotorwelle (16) über das erste und das zweite Lager (15, 5) gelagert ist.

3. Getriebemotor (50) nach einem der vorangegangenen Ansprüche,
**dadurch gekennzeichnet, dass**
das erste Lager (15) als Festlager ausgeführt ist.

4. Getriebemotor (50) nach einem der vorangegangenen Ansprüche,
**dadurch gekennzeichnet, dass**
das Sonnenrad (9) beabstandet ist von der Rotorwelle (16),
wobei in dem Raumbereich zwischen Sonnenrad (9) und Rotorwelle (16) Schmierstoff (13), insbesondere Schmierfett, angeordnet ist,
wobei der Raumbereich der Kupplungshülse (11), dem Sonnenrad (9) und der Rotorwelle (16) begrenzt ist.

5. Getriebemotor (50) nach einem der vorangegangenen Ansprüche,
**dadurch gekennzeichnet, dass**
das Sonnenrad (9) mit der Kupplungshülse (11) in Umfangsrichtung formschlüssig verbunden ist,
insbesondere wobei das Sonnenrad (9) eine Verzahnung (17) aufweist, die in das Material der Kupplungshülse (11) eingepresst und eingeschnitten ist.

6. Getriebemotor (50) nach einem der vorangegangenen Ansprüche,
**dadurch gekennzeichnet, dass**
die Rotorwelle (16) mit der Kupplungshülse (11) in Umfangsrichtung formschlüssig verbunden ist,
insbesondere wobei die Kupplungshülse (11) eine Verzahnung (17) aufweist, die in das Material der Kupplungshülse (11) eingepresst und eingeschnitten ist.

7. Getriebemotor (50) nach einem der vorangegangenen Ansprüche,
**dadurch gekennzeichnet, dass**
zwischen der Rotorwelle (16) und der Kupplungshülse (11), insbesondere auf der von dem Sonnenrad (9) abgewandten Seite des Verbindungsbereichs zwischen Rotorwelle (16) und Kupplungshülse (11), auf der Rotorwelle (16) ein Dichtring (14), insbesondere O-Ring, aufgesteckt ist, welcher zur Kupplungshülse (11) hin abdichtet und/oder an der Kupplungshülse (11) anliegt,
insbesondere so, dass kein Schmierstoff (13) aus dem Raumbereich in den Innenraum des Elektromotors gelangen kann und/oder so, dass der Dichtring (14) den Raumbereich zum Innenraum des Elektromotors hin abdichtet.

8. Getriebemotor (50) nach einem der vorangegangenen Ansprüche,
**dadurch gekennzeichnet, dass**
im Adapterring (4) ein Wellendichtring (12) aufgenommen ist, welcher zur Kupplungshülse (11) hin abdichtet.

9. Getriebemotor (50) nach einem der Ansprüche 6 bis 8,
**dadurch gekennzeichnet, dass**
der von dem zweiten Lager (5), insbesondere bezogen auf die Drehachse der Rotorwelle (16), in axialer Richtung überdeckte Bereich mit dem von der Verzahnung (17) der Kupplungshülse (11) in axialer Richtung überdeckten Bereich zumindest teilweise überlappt,
insbesondere wobei die Bereiche in axialer Richtung von der Gleitlagerbuchse (15) beabstandet sind.

## Claims

1. A geared motor (50), having an electric motor and a gear unit,
wherein the electric motor has a stator housing (1), a rotor shaft (16) and a first bearing (15) for mounting the rotor shaft (16),
wherein a coupling sleeve (11) is mounted on the rotor shaft (16) and is connected non-rotatably to the rotor shaft (16),
wherein an inner ring of a second bearing (5), in particular rolling bearing, in particular ball bearing, is mounted on the coupling sleeve (11), and the outer ring of the second bearing is received in an adapter ring (4) which is connected non-rotatably to a housing part (6) of the gear unit,
wherein the adapter ring (4) is connected on its side which faces away from the housing part (6) to a square flange (2) embodied in a ring-like manner which on its side which faces away from the adapter ring (4) is connected to a round flange (3) which is connected to the stator housing (1),
**characterised in that**
a sun wheel (9) of the gear unit has a trunnion-like extension which is inserted into the coupling sleeve (11),
with the sun wheel (9) being connected non-rotatably to the coupling sleeve (11).

2. A geared motor (50) according to claim 1,
**characterised in that**
the rotor shaft (16) is borne by way of the first and the second bearing (15, 5).

3. A geared motor (50) according to one of the preceding claims,
**characterised in that**
the first bearing (15) is embodied as a fixed bearing.

4. A geared motor (50) according to one of the preceding claims,
**characterised in that**
the sun wheel (9) is spaced apart from the rotor shaft (16),
with lubricant (13), in particular lubricating grease, being arranged in the spatial region between the sun wheel (9) and rotor shaft (16),
with the spatial region being limited [by] the coupling sleeve (11), the sun wheel (9) and the rotor shaft (16).

5. A geared motor (50) according to one of the preceding claims,
**characterised in that**
the sun wheel (9) is connected in a form-fit to the coupling sleeve (11) in the peripheral direction,
in particular with the sun wheel (9) having gearing (17) which is pressed and cut into the material of the coupling sleeve (11).

6. A geared motor (50) according to one of the preceding claims,
**characterised in that**
the rotor shaft (16) is connected in a form-fit to the coupling sleeve (11) in the peripheral direction,
in particular with the coupling sleeve (11) having gearing (17) which is pressed and cut into the material of the coupling sleeve (11).

7. A geared motor (50) according to one of the preceding claims,
**characterised in that**
between the rotor shaft (16) and the coupling sleeve (11), in particular on that side of the connection region between the rotor shaft (16) and coupling sleeve (11) which faces away from the sun wheel (9), a sealing ring (14), in particular O-ring, is mounted on the rotor shaft (16), which sealing ring seals off towards the coupling sleeve (11) and/or lies against the coupling sleeve (11),
in particular such that no lubricant (13) can pass out of the spatial region into the interior of the electric motor and/or such that the sealing ring (14) seals off the spatial region towards the interior of the electric motor.

8. A geared motor (50) according to one of the preceding claims,
**characterised in that**
a shaft sealing ring (12) which seals off towards the coupling sleeve (11) is received in the adapter ring (4).

9. A geared motor (50) according to one of claims 6 to 8,
**characterised in that**
the region covered in the axial direction by the second bearing (5), in particular relative to the axis of rotation of the rotor shaft (16), at least partly overlaps with the region covered in the axial direction by the gearing (17) of the coupling sleeve (11),
in particular with the regions being spaced apart from the plain-bearing bushing (15) in the axial direction.

## Revendications

1. Motor-réducteur (50), comprenant un moteur électrique et un réducteur,
le moteur électrique comprenant un boîtier de stator (1), un arbre de rotor (16) et un premier palier (15) pour le montage de l'arbre de rotor (16),
un manchon d'accouplement (11) étant monté sur l'arbre de rotor (16) et relié de manière solidaire en rotation avec l'arbre de rotor (16),
une bague intérieure d'un second palier (5), en particulier palier à roulement, en particulier roulement à billes, étant monté sur le manchon d'accouplement (11) et la bague extérieure du second palier étant reçue dans une bague d'adaptation (4), laquelle est reliée de manière solidaire en rotation avec une partie de boîtier (6) du réducteur,
la bague d'adaptation (4) étant, sur son côté opposé à la partie de boîtier (6), reliée à une bride carrée (2) de forme annulaire, laquelle, sur son côté opposé à la bague d'adaptation (4), est reliée à une bride ronde (3), laquelle est reliée au boîtier de stator (1),
**caractérisé en ce qu'**
une roue solaire (9) du réducteur présente une extension de type pivot qui est insérée dans le manchon d'accouplement (11),
la roue solaire (9) étant reliée de manière solidaire en rotation avec le manchon d'accouplement (11).

2. Motor-réducteur (50) selon la revendication 1,
**caractérisé en ce que**
l'arbre de rotor (16) est monté via le premier et le second palier (15, 5).

3. Motor-réducteur (50) selon l'une des revendications précédentes,
**caractérisé en ce que**
le premier palier (15) est réalisé comme palier fixe.

4. Motor-réducteur (50) selon l'une des revendications précédentes,
**caractérisé en ce que**
la roue solaire (9) est espacée de l'arbre de rotor (16),
un lubrifiant (13), en particulier une graisse lubrifiante, étant disposé dans la zone d'espace entre la roue solaire (9) et l'arbre de rotor (16),
la zone d'espace étant délimitée par le manchon d'accouplement (11), la roue solaire (9) et l'arbre de rotor (16).

5. Motor-réducteur (50) selon l'une des revendications précédentes,
**caractérisé en ce que**
la roue solaire (9) est reliée de manière à assurer un ajustement de forme avec le manchon d'accouplement (11) en direction circonférentielle,
en particulier la roue solaire (9) présentant une denture (17) qui est pressée et découpée dans le matériau du manchon d'accouplement (11).

6. Motor-réducteur (50) selon l'une des revendications précédentes,
**caractérisé en ce que**
l'arbre de rotor (16) est relié de manière à assurer un ajustement de forme avec le manchon d'accouplement (11) en direction circonférentielle,
en particulier le manchon d'accouplement (11) présentant une denture (17) qui est pressée et découpée dans le matériau du manchon d'accouplement (11).

7. Motor-réducteur (50) selon l'une des revendications précédentes,
**caractérisé en ce que**
entre l'arbre de rotor (16) et le manchon d'accouplement (11), en particulier sur le côté du domaine de liaison entre l'arbre de rotor (16) et le manchon d'accouplement (11) opposé à la roue solaire (9), une bague d'étanchéité (14), en particulier un joint torique, est monté sur l'arbre de rotor (16), lequel assure l'étanchéité vers le manchon d'accouplement (11) et/ou est en contact avec le manchon d'accouplement (11),
en particulier de sorte qu'aucun lubrifiant (13) ne puisse pénétrer de la zone d'espace dans l'espace intérieur du moteur électrique et/ou de sorte que le bague d'étanchéité (14) assure l'étanchéité de la zone d'espace vers l'espace intérieur du moteur électrique.

8. Motor-réducteur (50) selon l'une des revendications précédentes,
**caractérisé en ce que**
une bague d'étanchéité d'arbre (12) est reçue dans la bague d'adaptation (4), laquelle assure l'étanchéité vers le manchon d'accouplement (11).

9. Motor-réducteur (50) selon l'une des revendications 6 à 8,
**caractérisé en ce que**
la zone recouverte en direction axiale par le second palier (5),
en particulier par rapport à l'axe de rotation de l'arbre de rotor (16), chevauche au moins partiellement la zone recouverte en direction axiale par la denture (17) du manchon d'accouplement (11),
en particulier les zones étant espacées en direction axiale de la douille de palier lisse (15).
